# EUROPÄISCHE PATENTSCHRIFT

(11) **EP 1 270 094 B1**
(45) Veröffentlichungstag und Bekanntmachung des Hinweises auf die Patenterteilung: **26.07.2017**
(21) Anmeldenummer: 02014275.8
(22) Anmeldetag: 26.06.2002
(51) Int. Cl.: B08B 3/12, G01H 3/10

(54) **Vorrichtung und Verfahren zum Testen der Effizienz eines Ultraschallreinigungsgerätes**
Device and method for testing the efficiency of an ultrasonic cleaning apparatus
Dispositif et procédé pour tester l'efficacité d'un appareil de nettoyage à ultrasons

(30) Priorität: 26.06.2001 DE 10130682
(43) Veröffentlichungstag der Anmeldung: 02.01.2003
(73) Patentinhaber: Pereg GmbH, 84478 Waldkraiburg (DE)
(72) Erfinder: Pfeifer, Martin, 84478 Waldkraiburg (DE)
(74) Vertreter: Jehle, Volker Armin

(56) Entgegenhaltungen:
- WO-A-95/10054
- US-A- 3 134 728
- US-A- 3 672 823
- US-A- 4 477 357
- US-A- 5 433 102
- PATENT ABSTRACTS OF JAPAN Bd. 1999, Nr. 13, 30. November 1999 (1999-11-30) & JP 11 211664 A (SHOKUHIN SANGYO DENSHI RIYOU GIJUTSU KENKYU KUMIAI), 6. August 1999 (1999-08-06)

## Beschreibung

Die Erfindung richtet sich auf eine Vorrichtung und ein Verfahren zum Testen der Effizienz eines Ultraschallgerätes.

Zum Reinigen von medizinischen Bestecken und Instrumenten, insbesondere bei Instrumenten mit zahlreichen Hinterschneidungen werden, Ultraschallreinigungsgeräte verwendet. Zu diesem Zweck werden die kontaminierten Bestecke und Instrumente in einem dafür vorgesehenen Becken plaziert, von Wasser umspült und durch die von den Ultraschallwellen erzeugte Kavitation im Wasser gereinigt. Bei der Reinigung mittels Ultraschallwellen breiten sich diese im Wasser aus und bewirken so die Kavitation des Wassers. Der Reinigungseffekt tritt durch das Kollabieren der Kavitationsblasen ein, die sich beim Kollabieren an einer Wandseite einstülpen, woraus sich ein Flüssigkeitsstrahl bildet, der mit hoher Geschwindigkeit durch die Blase schießt und auf die gegenüberliegende Wand der Blase trifft Hierbei werden Geschwindigkeiten bis zu 500 m/s. erreicht. Der erzielte Reinigungseffekt begründet sich in den so ausgelösten Flüssigkeitsstrahlen, die auf die kontaminierten Bestecke und Instrumente treffen und die Verunreinigungen von den Oberflächen dieser Bestecke und Instrumente ablösen.

Aufgrund der inhomogenen Verteilung der Ultraschallwellen in einem Becken gibt es Bereiche, die eine geringe Kavitationsdichte aufweisen und Bereiche mit hoher Kavitationsdichte, so daß in den Bereichen mit hoher Kavitationsdichte eine höhere Reinigungsleistung vorliegt als in denen mit geringerer Kavitationsdichte. Da das Ausbreiten der Ultraschallwellen nicht sichtbar und die Kavitationsbläschen lediglich schlecht sichtbar sind, ist es nicht möglich, allein durch Beobachten des Wassers im Becken die Bereiche mit hoher Kavitationsleistung und mit hoher Reinigungsleistung einzugrenzen.

Eine Möglichkeit die Effizienz der Ultraschallgetäte zu testen ist das Eintauchen von dünner, herkömmlicher Aluminiumfolie, die durch die Kavitation mit kleinen Löchern versehen werden, und so ein Vorhandensein der Kavitation feststellen lassen. Als nachteilig hat sich bei diesen Verfahren erwiesen, daß eine objektive und reproduzierbare Testgtöße fehlt, um die Effizienz des Ultraschallgerätes zuverlässig beurteilen zu können. Das Dokument JP-A-11211664 offenbart eine Vorrichtung gemäß dem Oberbegriff des Anspruchs 1 und ein Verfahren gemäß dem Oberbegriff des Anspruchs 13. Aufgabe der vorliegenden Erfindung ist es daher, eine Vorrichtung und ein Verfahren bereitzustellen, um ein zuverlässiges und reproduzierbares Testen der Effizienz eines Ultraschallgerätes zu ermöglichen.

Diese Aufgabe wird erfindungsgemäß durch die Vorrichtung mit den Merkmalen gemäß Anspruch 1 sowie durch ein Verfahren mit den Merkmalen gemäß Anspruch 13 gelöst. Vorteilhafte Weiterentwicklungen der Erfindung sind in den Unteransprüchen gekennzeichnet.

Die erfindungsgemäße Vorrichtung zum Testen der Effizienz eines Ultraschallreinigungsgerätes besteht aus einem Behälter mit mindestens einem Fluid, welches aufgrund freiwerdender Energie kollabierender, durch Ultraschallwellen gebildeter Kavitationsbläschen seine chemische Zusammensetzung verändert und diese Veränderung optisch wahrnehmbar ist Hierzu ist der Behälter der erfindungsgemäßen Vorrichtung vorteilhafterweise zumindest teilweise transparent ausgebildet.

Bei der Verwendung der erfindungsgemäßen Vorrichtung zum Testen der Effizienz eines Ultraschallreinigungsgerätes wird dieses so in einem Ultraschallreinigungsbad fixiert, daß die sich im Wasser ausbreitenden Ultraschallwellen auch durch den Behälter der erfindungsgemäßen Vorrichtung zum Testen der Effizienz eines Ultraschallreinigungsgerätes bewegen.

Der Plazierungsort des Behälters im Ultraschallreinigungsbecken sollte zweckmäßigerweise so gewählt werden, daß das Testergebnis, d.h. die optische Veränderung des Fluids im Behälter eine repräsentative Aussage über die sich ausbreitenden Ultraschallwellen im Ultraschallreinigungsbecken erlauben.

Ist der Behälter der erfindungsgemäßen Vorrichtung entsprechend im Ultraschallreinigungsbecken plaziert, breiten sich die Ultraschallwellen auch durch den Behälter, der vorzugsweise aus Glas oder Kunststoff besteht, aus. Aufgrund der physikalischen Gesetzmäßigkeiten, die durch das Einleiten von Ultraschallwellen in Wasser bzw. einer wäßrigen Lösung ablaufen, werden durch frei werdende Energie kollabierender, durch Ultraschallwellen gebildeter Kavitationsbläschen in der wäßrigen Lösung bzw. Wasser gelöste Moleküle dissoziiert, so daß diese nunmehr als Radikale vorliegende Molekülbestandteile in der wäßrigen Lösung bzw. Wasser vorliegende Ionen oxidieren bzw. reduzieren.

Da die Anzahl der oxidierten bzw. reduzierten Ionen ein Maß für die freiwerdende Energie kollabierender Kavitationsbläschen darstellt, ist erfindungsgemäß in der wäßrigen Lösung bzw. Wasser eine Nachweissubstanz vorgesehen, die die oxidierten bzw. reduzierten Ionen nachweisen.

Vorteilhafterweise wird dieser Nachweis durch eine Verfärbung des Fluids geführt, wobei die Verfärbung durch eine chemische Reaktion eingeleitet wird, die durch handelsübliche Nachweisverfahren ausgelöst wird. Ebenso kann dieser Nachweis durch eine Eintrübung des Fluids geführt werden.

Mit der Vorrichtung der vorliegenden Erfindung wird daher der Vorteil erreicht, die Effizienz eines Ultraschallreinigungsgerätes anhand der Verfärbung oder auch Eintrübung des Fluids in dem Behälter optisch feststellen, indem lediglich nach einem Testlauf des Ultraschallreinigungsgerätes dieser Behälter aus der Ultraschallreinigungsschale entnommen wird und durch bloßes Betrachten des Fluids im Behälter, die jeweilige Farbveränderung bzw. Intensität der Veränderung festgestellt wird. Vorteilhafterweise können mehrere Behälter gleichzeitig in einer Ultraschallreinigungsschale plaziert werden, da, wie bereits oben dargestellt, das Ausbreitungsverhalten von Ultraschallwellen in einem Ultraschallreinigungsgerät nicht homogen erfolgt und durch Interferenzen oder Schwebungen Bereiche innerhalb der Ultraschallreinigungswanne bestehen können, in denen eine hohe Kavitationsdichte vorherrscht und andere, in denen eine eher geringe Kavitationsdichte vorherrscht. Unterschiedliche Kavitationsdichten lassen sich über unterschiedliche Verfärbungsgrade des Fluids im Behälter optisch nachweisen.

Vorteilhafterweise kann mittels der erfindungsgemäßen Vorrichtung eine Referenzveränderung des Fluids festgelegt werden, bei dem beispielsweise eine gute Reinigungsleistung bei gewissen Parametern des Ultraschallreinigungsgerätes erbracht wird. Diese Referenzgröße besteht beispielsweise in der Festlegung eines bestimmten Farbtones oder der optischen Dichte des nunmehr veränderten Fluids im Behälter, welche beispielsweise über eine Lichtschranke oder andere technische Geräte zur Auswertung von Trübungen von Fluiden festgestellt werden kann.

Ein weiterer Vorteil der vorliegenden Erfindung besteht in der exakten Reproduzierbarkeit und Konservierbarkeit der Testergebnisse, da die veränderte chemische Zusammensetzung des Fluids, beispielsweise durch Einfrieren des Fluids über einen gewissen Zeitraum konserviert werden kann.

Um ein zuverlässiges Kavitationsverhalten des im Behälter befindlichen Fluids zu gewährleisten, wird ein Kavitationskeim im Inneren des Behälters der erfindungsgemäßen Vorrichtung vorgesehen. Ein solcher Kavitationskeim kann beispielsweise durch entsprechende Vorsprünge der Behälterwand realisiert werden oder auch durch Einbringen von Fremdkörpern wie beispielsweise Glaskugeln oder Quatzsand.

Ebenso ist es möglich, einen stiftartigen Kavitationskeim am Deckel des Behälters anzuordnen, der beim Schließen des Behälters in das Fluid eintaucht

Bei einer besonders bevorzugten Ausführungsform der vorliegenden Erfindung kann der Keimbereich für die Kavitation auch als aufgerauhte Oberfläche auf der Behälterwand realisiert sein.

Um gewährleisten zu können, daß der Behälter der vorliegenden Erfindung starr im Ultraschallreinigungsbecken verbleibt ist es zweckmäßig diesen Behälter mittels geeigneter Halterungsvorrichtungen start, jedoch lösbar, mit den Becken in denen die Ultraschallreinigung stattfindet zu verbinden.

Zum leichteren Handhaben der erfindungsgemäßen Vorrichtung ist es zweckmäßig eine Tafel vorzusehen auf der eine Relation zwischen der Leistung des Ultraschallreinigungsgeräts und der Verfärbung des Fluids im Behälter dokumentiert ist.

Vorteilhafterweise ist der Behälter oberhalb des Fluids, bestehend im wesentlichen aus einer wäßrigen Lösung oder Wasser mit einem weiteren Fluid gefüllt, wobei dieses Fluid vorteilhafterweise eine Gasblase ist. Die während der Kavitation frei werdenden Radikale oxidieren bzw. reduzieren, jeweils in Abhängigkeit von den gelösten Substanzen Ionen, die aus dem oberhalb des Fluids befindlichen Gasblase stammen. Ebenso ist es auch möglich den Behälter so zu füllen, daß über dem mindestens ein Fluid kein weiteres Fluid vorliegt.

Nachfolgend wird der chemische Anteil des erfindungsgemäßen Verfahrens anhand einiger Beispiele möglicher Zusammensetzungen des Fluids und der durch die Kavitation bewirkten Veränderung in der chemischen Zusammensetzung näher erläutert.

### Beispiel 1:

In den Behälter der erfindungsgemäßen Vorrichtung wird eine wäßrige Natrium-Chlorid-Lösung (NaCl-Lösung) gegeben. Oberhalb des Fluidspiegels befindet sich eine Gasblase atmosphärischer Luft. Während der Kavitation werden Chlorid-Ionen durch den aktivierten Sauerstoff zu Chlor oxidiert und dieser durch einen handelsüblichen Chlortest, beispielsweise Tetramethylbenzidin nachgewiesen. Dieser handelsübliche Chlortest verursacht eine Gelbfärbung im Fluid. In die 1,1 ml wäßrige Lösung wurden 20 mg NaCl gelöst. Zum Erzeugen der Kavitation wurden 1,1g Glaskugeln von 1,25-1,55 mm Durchmesser in den Behälter eingebracht.

### Beispiel 2:

Oxidation von rotem Phosphor oder Phosphit (PO₃³⁻)zu Phosphat mit gleichzeitigem Phosphatnachweis. Phosphat reagiert in saurer Lösung mit Molybdat und Antimoniumionen zu einem Komplex der zu Phosphormolybdänblau reduziert werden kann.

### Weitere Beispiele:

Die nachfolgenden Systeme bewirken eine Verfärbung durch ein Reaktionsprodukt oder deren Nachweisreaktion und eignen sich für die erfindungsgemäße Verwendung:
1. Formaldehydnachweis mit Antimoniumionen und Acetylaceton. Es entsteht eine Gelbfärbung nach Oxidation von Methanol.
2. Redox-System: Chromat/Dichromat
3. Redox-System: Ce³⁺/Ce⁴⁺.
4. Redox-System: Fe²⁺/Fe³⁺.
5. Redox-System: Cu⁺/Cu²⁺,
6. Oxidation der Halogenid-Ionen Cl-, Br-, I- zu den entsprechenden Halogenen und deren Nachweis durch Farbreaktion, oder durch UV-VIS Spektralphotometrie.
7. Abspaltung von Halogenen oder Halogenwasserstoff aus Halogenorganischen Verbindungen (beispielsweise Chloroform) und deren Nachweis.
8. Oxidative oder reduktive Entfärbung von Farbstoffen.
9. Oxidative oder reduktive Bildung von Farbstoffen.
10. Polymerisation von organischen Monomeren.

Nachfolgend wird eine bevorzugte Ausführungsform der erfindungsgemäßen Vorrichutng anhand nachfolgender Zeichnungen näher erläutert Es zeigen:
Figur 1 eine Ausführungsform der vorliegenden Erfindung mit einem stiftartigen Keimbereich der in das Fluid eintaucht;
Figur 2 eine andere bevorzugte Ausführungsform der vorliegenden Erfindung bei der kugelförmige Keimelemente in Behältern angeordnet sind.

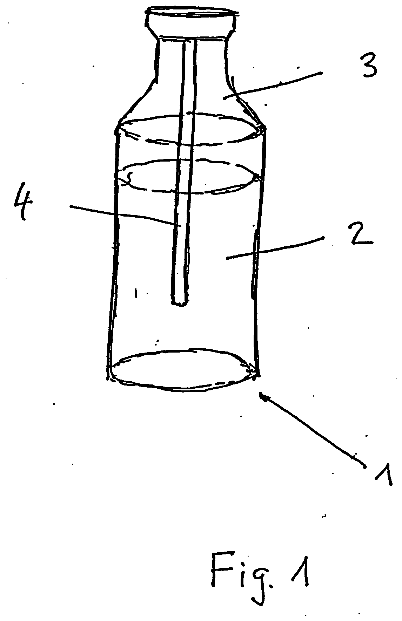

Bei der Anordnung gemäß Figur 1 ist der Behälter 1 mit einem Fluid 2 gefüllt, wobei das Fluid eine wäßrige Kochsalzlösung ist Oberhalb der Fluidgrenze schließt der Behälter 1 eine Gasblase 3 ein, wobei die Gasblase aus atmosphärischer Luft besteht Zur Beschleunigung der Kavitationsbildung ragt ein keimbildendes Element 4 in das Fluid 2 wobei dieses keimbildende Element stabförmig ausgebildet ist und vorzugsweise eine rauhe Oberfläche aufweist In dem Fluid 2 enthalten ist ein Nachweisstoff, der bei der vorliegenden wäßrigen Kochsalzlösung das oxidierte Chlor farblich nachweisen kann.

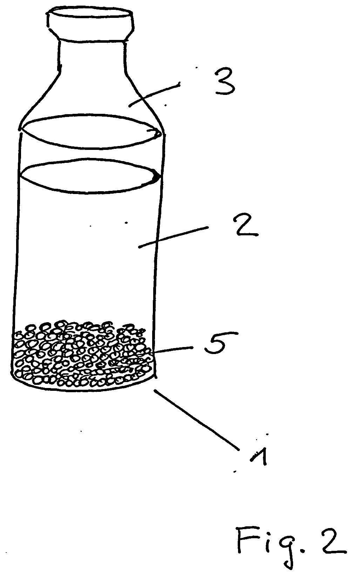

Gemäß der Anordnung in Figur 2 ist in dem Behälter 2 als keimbildendes Element eine Anzahl von Glaskugeln 5 eingebracht worden, die ebenfalls eine Kavitationsbildung beschleunigen. Oberhalb der Fluidgrenze des Fluids 2 ist ebenfalls eine Gasblase 3 vorgesehen, welche mit atmosphärischer Luft ausgefüllt ist

## Patentansprüche

1. Vorrichtung zum Testen der Effizienz eines Ultraschallreinigungsgeräts bestehend aus einem Behälter (1) mit mindestens einem Fluid (2), welches aufgrund frei werdender Energie kollabierender, durch Ultraschallwellen gebildeter Kavitationsbläschen seine chemische Zusammensetzung verändert und diese Veränderung optisch wahrnehmbar ist, **dadurch gekennzeichnet dass** der Behälter (1) zumindest einen Bereich aufweist, der als Keim (4,5) für die Kavitation geeignet ist, wobei der Keimbereich (4,5) von Elementen gebildet wird, die lose im Behälter vorliegen, der Keimbereich (4) im Behälter (1) integriert ist, der Keimbereich (4) als aufgeraute Oberfläche auf der Behälterwand vorliegt oder der Keimbereich (4) als vorstehende Oberfläche der Behälterwand vorliegt.

2. Vorrichtung zum Testen der Effizienz eines Ultraschallreinigungsgeräts nach Anspruch 1, wobei die Behälterwand zumindest teilweise transparent ausgebildet ist.

3. Vorrichtung zum Testen der Effizienz eines Ultraschallreinigungsgeräts nach Anspruch 1, wobei das Fluid (2) eine wäßrige Lösung ist.

4. Vorrichtung zum Testen der Effizienz eines Ultraschallreinigungsgeräts nach Anspruch 3, wobei aufgrund frei werdender Energie kollabierender, durch Ultraschallwellen gebildeter Kavitationsbläschen in der wäßrigen Lösung gelöste Moleküle dissoziiert werden und diese nunmehr als Radikale vorliegende Molekülbestandteile in der wäßrigen Lösung vorliegende Ionen oxidieren oder reduzieren.

5. Vorrichtung zum Testen der Effizienz eines Ultraschallreinigungsgeräts nach Anspruch 3 oder 4, wobei die wäßrige Lösung im wesentlichen aus H₂O besteht.

6. Vorrichtung zum Testen der Effizienz eines Ultraschallreinigungsgeräts nach Anspruch 5, wobei zum Nachweis der oxidierten bzw. reduzierten Ionen Nachweisstoffe in der wäßrigen Lösung vorgesehen sind.

7. Vorrichtung zum Testen der Effizienz eines Ultraschallreinigungsgeräts nach Anspruch 6, wobei die wäßrige Lösung eine NaCl-Lösung ist und die oxidierten Ionen Cl⁻-Ionen sind.

8. Vorrichtung zum Testen der Effizienz eines Ultraschallreinigungsgeräts nach Anspruch 5 wobei die oxidierten Ionen Halogenionen sind.

9. Vorrichtung zum Testen der Effizienz eines Ultraschallreinigungsgeräts nach einem der vorherigen Ansprüche, wobei der Behälter weiterhin mit einem weiteren (3) gefüllt ist.

10. Vorrichtung zum Testen der Effizienz eines Ultraschallreinigungsgeräts nach Anspruch 9, wobei das weitere Fluid (3) eine Gasblase ist.

11. Vorrichtung zum Testen der Effizienz eines Ultraschallreinigungsgeräts nach Anspruch 10, wobei das Gas atmosphärische Luft ist.

12. Vorrichtung zum Testen der Effizienz eines Ultraschallreinigungsgeräts nach Anspruch 1, wobei die losen Elemente Glaskugeln oder Quarzsand sind.

13. Verfahren zum Testen der Effizienz eines Ultraschallreinigungsgeräts, wobei ein Behälter in das Ultraschallreinigungsgerät eingebracht wird und mit mindestens einem Fluid (2) gefüllt ist, welches aufgrund der frei werdender Energie kollabierender, durch Ultraschallwellen gebildeter Kavitationsbläschen seine chemische Zusammensetzung verändert und diese Veränderung optisch wahrnehmbar ist, **dadurch gekennzeichnet dass** der Behälter (1) zumindest einen Bereich aufweist, der als Keim (4,5) für die Kavitation geeignet ist, wobei der Keimbereich (4,5) von Elementen gebildet wird, die lose im Behälter vorliegen, der Keimbereich (4) im Behälter (1) integriert ist, der Keimbereich (4) als aufgeraute Oberfläche auf der Behälterwand vorliegt oder der Keimbereich (4) als vorstehende Oberfläche der Behälterwand vorliegt.

14. Verfahren zum Testen der Effizienz eines Ultraschallreinigungsgeräts nach Anspruch 13, wobei die Veränderung der chemischen Zusammensetzung als Oxidation oder Reduktion vorliegt und der Umfang der oxidierten bzw. reduzierten Verbindungen mittels optischer Nachweistechniken feststellbar ist.

15. Verfahren zum Testen der Effizienz eines Ultraschallreinigungsgeräts nach Anspruch 14, wobei sich der Umfang der oxidierten bzw. reduzierten Verbindungen an einer Verfärbung des Fluids (2) ablesen läßt.

16. Verfahren zum Testen der Effizienz eines Ultraschallreinigungsgeräts nach Anspruch 15, wobei der Grad der Verfärbung des Fluids (2) in Relation zur Effizienz des Ultraschallreinigungsgeräts steht.

17. Verfahren zum Testen der Effizienz eines Ultraschallreinigungsgeräts nach Anspruch 16, wobei der Grad der Verfärbung auf Tafeln geführt wird.

18. Kit zum Testen der Effizienz eines Ultraschallreinigungsgeräts bestehend aus einer Vorrichtung nach einem der Ansprüche 1 bis 12 und einer Tafel, auf der eine Relation zwischen der Leistung des Ultraschallreinigungsgeräts und der Verfärbung des Fluid in Behälter der Vorrichtung dokumentiert ist.

## Claims

1. An apparatus for testing the efficiency of an ultrasonic cleaning device, consisting of a container (1) with at least one fluid (2) which changes its chemical composition due to energy released from collapsing cavitation bubbles formed by ultrasonic waves, this change being optically perceptible, **characterized in that** the container (1) comprises at least one region suitable as a nucleus (4, 5) for cavitation, wherein the nucleus region (4, 5) is formed by elements available loosely in the container, the nucleus region (4) is integrated in the container, the nucleus region (4) is available as a roughened surface on the container wall, or the nucleus region (4) is available as a projecting surface of the container wall.

2. The apparatus for testing the efficiency of an ultrasonic cleaning device according to claim 1, wherein the container wall is designed to be at least partially transparent.

3. The apparatus for testing the efficiency of an ultrasonic cleaning device according to claim 1, wherein the fluid (2) is an aqueous solution.

4. The apparatus for testing the efficiency of an ultrasonic cleaning device according to claim 3, wherein, due to energy released by collapsing cavitation bubbles formed by ultrasonic waves, molecules dissolved in the aqueous solution are dissociated and these molecule components which are now available as radicals oxidize or reduce ions available in the aqueous solution.

5. The apparatus for testing the efficiency of an ultrasonic cleaning device according to claims 3 or 4, wherein the aqueous solution consists substantially of H₂O.

6. The apparatus for testing the efficiency of an ultrasonic cleaning device according to claim 5, wherein, for detecting the oxidized and/or reduced ions, detection substances are provided in the aqueous solution.

7. The apparatus for testing the efficiency of an ultrasonic cleaning device according to claim 6, wherein the aqueous solution is a NaCl solution and the oxidized ions are Cl ions.

8. The apparatus for testing the efficiency of an ultrasonic cleaning device according to claim 5, wherein the oxidized ions are halogen ions.

9. The apparatus for testing the efficiency of an ultrasonic cleaning device according to any of the preceding claims, wherein the container is additionally filled with a further fluid (3).

10. The apparatus for testing the efficiency of an ultrasonic cleaning device according to claim 9, wherein the further fluid (3) is a gas bubble.

11. The apparatus for testing the efficiency of an ultrasonic cleaning device according to claim 10, wherein the gas is atmospheric air.

12. The apparatus for testing the efficiency of an ultrasonic cleaning device according to claim 1, wherein the loose elements are glass balls or quartz sand.

13. A method for testing the efficiency of an ultrasonic cleaning device, wherein a container is placed in the ultrasonic cleaning device and is filled with at least one fluid (2) which changes its chemical composition due to energy released from collapsing cavitation bubbles formed by ultrasonic waves, this change being optically perceptible, **characterized in that** the container (1) comprises at least one region suitable as a nucleus (4, 5) for cavitation, wherein the nucleus region (4, 5) is formed by elements available loosely in the container, the nucleus region (4) is integrated in the container (1), the nucleus region (4) is available as a roughened surface on the container wall, or the nucleus region (4) is available as a projecting surface of the container wall.

14. The method for testing the efficiency of an ultrasonic cleaning device according to claim 13, wherein the change in the chemical composition is available as an oxidation or reduction and the scope of the oxidized and/or reduced compounds is detectable by means of optical detection techniques.

15. The method for testing the efficiency of an ultrasonic cleaning device according to claim 14, wherein the scope of the oxidized and/or reduced compounds may be read from a discoloration of the fluid (2).

16. The method for testing the efficiency of an ultrasonic cleaning device according to claim 15, wherein the degree of discoloration of the fluid (2) is in relation to the efficiency of the ultrasonic cleaning apparatus.

17. The method for testing the efficiency of an ultrasonic cleaning device according to claim 16, wherein the degree of discoloration is registered on tables.

18. A kit for testing the efficiency of an ultrasonic cleaning device consisting of an apparatus according to any of claims 1 to 12 and a table on which a relation between the performance of the ultrasonic cleaning device and the discoloration of the fluid in the container of the apparatus is documented.

## Revendications

1. Dispositif pour tester l'efficacité d'un appareil de nettoyage à ultrasons, composé d'un récipient (1) contenant au moins un fluide (2) dont la composition chimique change en raison de l'énergie libérée par l'effondrement de bulles de cavitation formées par des ondes ultrasonores, ce changement étant détectable optiquement, **caractérisé en ce que** le récipient (1) présente au moins une zone qui convient comme germination (4, 5) pour la cavitation, la zone de germination (4, 5) étant formée d'éléments qui sont présents librement dans le récipient, la zone de germination (4) étant intégrée dans le récipient (1), la zone de germination (4) étant présente sous la forme d'une surface rugueuse sur la paroi de récipient ou la zone de germination (4) étant présente sous la forme d'une surface saillante de la paroi de récipient.

2. Dispositif pour tester l'efficacité d'un appareil de nettoyage à ultrasons selon la revendication 1, dans lequel la paroi de récipient est au moins partiellement transparente.

3. Dispositif pour tester l'efficacité d'un appareil de nettoyage à ultrasons selon la revendication 1, dans lequel le fluide (2) est une solution aqueuse.

4. Dispositif pour tester l'efficacité d'un appareil de nettoyage à ultrasons selon la revendication 3, dans lequel, en raison de l'énergie libérée par l'effondrement de bulles de cavitation formées par des ondes ultrasonores, des molécules dissoutes dans la solution aqueuse sont dissociées et ces composants moléculaires, désormais présents sous la forme de radicaux, oxydent ou réduisent les ions présents dans la solution aqueuse.

5. Dispositif pour tester l'efficacité d'un appareil de nettoyage à ultrasons selon la revendication 3 ou la revendication 4, dans lequel la solution aqueuse est composée essentiellement de H₂O.

6. Dispositif pour tester l'efficacité d'un appareil de nettoyage à ultrasons selon la revendication 5, dans lequel des substances de détection sont prévues dans la solution aqueuse pour détecter les ions oxydés ou réduits.

7. Dispositif pour tester l'efficacité d'un appareil de nettoyage à ultrasons selon la revendication 6, dans lequel la solution aqueuse est une solution de NaCl et les ions oxydés sont des ions Cl⁻.

8. Dispositif pour tester l'efficacité d'un appareil de nettoyage à ultrasons selon la revendication 5, dans lequel les ions oxydés sont des ions halogènes.

9. Dispositif pour tester l'efficacité d'un appareil de nettoyage à ultrasons selon l'une des revendications précédentes, dans lequel le récipient est en outre rempli d'un autre fluide (3).

10. Dispositif pour tester l'efficacité d'un appareil de nettoyage à ultrasons selon la revendication 9, dans lequel l'autre fluide (3) est une bulle de gaz.

11. Dispositif pour tester l'efficacité d'un appareil de nettoyage à ultrasons selon la revendication 10, dans lequel le gaz est de l'air atmosphérique.

12. Dispositif pour tester l'efficacité d'un appareil de nettoyage à ultrasons selon la revendication 1, dans lequel les éléments libres sont des billes de verre ou du sable siliceux.

13. Procédé pour tester l'efficacité d'un appareil de nettoyage à ultrasons, selon lequel un récipient est introduit dans appareil de nettoyage à ultrasons et rempli d'au moins un fluide (2) dont la composition chimique change en raison de l'énergie libérée par l'effondrement de bulles de cavitation formées par des ondes ultrasonores, ce changement étant détectable optiquement, **caractérisé en ce que** le récipient (1) présente au moins une zone qui convient comme germination (4, 5) pour la cavitation, la zone de germination (4, 5) étant formée d'éléments qui sont présents librement dans le récipient, la zone de germination (4) étant intégrée dans le récipient (1), la zone de germination (4) étant présente sous la forme d'une surface rugueuse sur la paroi de récipient ou la zone de germination (4) étant présente sous la forme d'une surface saillante de la paroi de récipient.

14. Procédé pour tester l'efficacité d'un appareil de nettoyage à ultrasons selon la revendication 13, selon lequel le changement de composition chimique est présent sous la forme d'une oxydation ou d'une réduction et le volume des composés oxydés ou réduits peut être déterminé au moyen de techniques de détection optiques.

15. Procédé pour tester l'efficacité d'un appareil de nettoyage à ultrasons selon la revendication 14, selon lequel le volume des composés oxydés ou réduits peut se lire à une coloration du fluide (2).

16. Procédé pour tester l'efficacité d'un appareil de nettoyage à ultrasons selon la revendication 15, dans lequel le degré de coloration du fluide (2) est en relation avec l'efficacité de l'appareil de nettoyage à ultrasons.

17. Procédé pour tester l'efficacité d'un appareil de nettoyage à ultrasons selon la revendication 16, dans lequel le degré de coloration est indiqué dans des tables.

18. Kit pour tester l'efficacité d'un appareil de nettoyage à ultrasons, composé d'un dispositif selon l'une des revendications 1 à 12 et d'une table dans laquelle est documentée une relation entre l'efficacité de l'appareil de nettoyage à ultrasons et la coloration du fluide dans le récipient du dispositif.
